# EUROPÄISCHE PATENTSCHRIFT

(11) **EP 2 557 014 B1**
(45) Veröffentlichungstag und Bekanntmachung des Hinweises auf die Patenterteilung: **09.07.2014**
(21) Anmeldenummer: 12177073.9
(22) Anmeldetag: 19.07.2012
(51) Int. Cl.: B61C 15/14, B61F 5/38, B60L 15/20

(54) **Verfahren zur Regelung einer Antriebseinheit für Schienenfahrzeuge und Antriebseinheit für Schienenfahrzeuge**
Methods for regulating a drive unit for rail vehicles and drive unit for rail vehicles
Procédé de régulation d'une unité d'entraînement pour véhicules sur rails et unité d'entraînement pour véhicules sur rail

(30) Priorität: 12.08.2011 AT 11772011
(43) Veröffentlichungstag der Anmeldung: 13.02.2013
(73) Patentinhaber: Traktionssysteme Austria GmbH, 2351 Wiener Neudorf (AT)
(72) Erfinder: Neudorfer, Harald, 2514 Traiskirchen (AT)
(74) Vertreter: Sonn & Partner Patentanwälte

(56) Entgegenhaltungen:
- EP-A1- 0 919 447
- EP-A2- 0 936 125
- EP-A2- 2 301 789
- DE-A1- 19 826 452
- DE-A1-102006 012 215

## Beschreibung

Die Erfindung betrifft ein Verfahren zur Regelung einer Antriebseinheit für Schienenfahrzeuge nach dem Oberbegriff des Patentanspruchs 1.

Die Erfindung betrifft weiters eine Antriebseinheit für Schienenfahrzeuge nach dem Oberbegriff des Patentanspruchs 5.

Bei Einzelantrieben für elektrisch angetriebene Schienenfahrzeuge, wie insbesondere Straßenbahnen, werden üblicherweise Asynchronmotoren als Radnabenmotoren eingesetzt. Dabei hat sich gezeigt, dass lauftechnische Probleme und ein erhöhter Spurkranzverschleiß auftreten, da die einander gegenüberliegenden Räder nicht gekoppelt sind.

Eine Kopplung mit Hilfe einer zwischen den Rädern eines Räderpaares angeordneten Welle ist bei den modernen Niederflur-Straßenbahnen ("ULF": Ultra Low Floor) problematisch, da diese einen tiefliegenden Wagenkasten verhindert.

Da insbesondere permanentmagneterregte elektrische Synchronmaschinen im Vergleich zu Asynchronmaschinen eine höhere Leistungsdichte aufweisen, kommen diese in letzter Zeit verstärkt als Antrieb von Schienenfahrzeugen zur Anwendung. Die Geschwindigkeitsregelung der Synchronmotoren erfolgt über entsprechende Wechselrichter.

Die EP 1 247 713 B1 beschreibt ein Fahrwerk für Schienenfahrzeuge ohne Radsätze, wobei Synchronmotoren jeweils die Einzelräder direkt oder über Getriebe antreiben. Eine elektrische Kopplung der beiden gegenüberliegenden Einzelräder erfolgt durch Parallelschaltung und Speisung beider Synchronmotoren über einen gemeinsamen Wechselrichter. Dadurch wird zwar eine elektrische Kopplung der Einzelräder erzielt, welche bei Geradeausfahrt von Vorteil ist und den Verschleiß an Rädern und Schienen reduziert, bei Kurvenfahrt werden jedoch keine Vorteile erreicht, da die Einzelräder auch in der Kurve stark miteinander gekoppelt sind. In der Folge resultiert bei Kurvenfahrt des Schienenfahrzeugs ein erhöhter Verschleiß an Rädern und Schienen und eine erhöhte Lärmentwicklung.

Die EP 919 447 A1 beschreibt einen Antrieb für Schienenfahrzeuge, wobei die Einzelräder ebenfalls durch Synchronmotoren angetrieben werden, welche wiederum durch einzelne Wechselrichter entsprechend angesteuert werden. Über eine Regeleinrichtung, welche mit Sensoren zur Erfassung der Kurvenlage des Schienenfahrzeugs verbunden ist, erfolgt eine derartige Regelung der einzelnen Wechselrichter, so dass die in der Kurve außenliegenden Einzelräder mit einer höheren Umdrehungszahl angetrieben werden als die in der Kurve innenliegenden Einzelräder. Dadurch kann eine Reduktion des Verschleißes der Laufräder und der Schiene sowie eine Reduktion der Lärmentwicklung bei Kurvenfahrt erzielt werden. Zur parallelen Orientierung der gegenüberliegenden Einzelräder sind zusätzlich mechanische Kopplungen über Stabilisatoren vorgesehen. Eine Kopplung der gegenüberliegenden Einzelräder bei Geradeausfahrt ist nicht vorgesehen.

Die DE 198 26 452 A1 beschreibt ein Verfahren zur Antriebskoordinierung eines einzelradgetriebenen Schienenfahrzeugs, bei dem im Falle einer Geradeausfahrt die Antriebe der gegenüberliegenden Räder synchronisiert werden und bei Kurvenfahrt unterschiedlich angetrieben werden.

Die EP 590 183 A1 betrifft ein Verfahren und eine Vorrichtung zur Verbesserung der Laufeigenschaften eines Drehgestells, wobei eine Regelung der Antriebe der Räder radblockweise erfolgt.

Die DE 33 45 260 A1 betrifft ein Schienenfahrzeug mit Elektroantrieb, wobei zur Vermeidung einer Wendebewegung eines Radsatzes und des daraus resultierenden Anlaufens der Spurgrenze an der Fahrkante der Schiene eine korrigierende Steuerung der Drehmomente der Elektromotoren vorgenommen wird.

Die EP 511 949 A2 betrifft ein Verfahren zur Steuerung eines Fahrwerks ohne starre Achsverbindung, wobei zumindest während eines Geraudeauslaufes die einander gegenüberliegenden Räder mit unterschiedlicher Leistung betrieben werden, so dass insbesondere ein Sinuslauf erzielbar ist.

Die Aufgabe der vorliegenden Erfindung besteht darin, ein oben genanntes Verfahren bzw. eine oben genannte Antriebseinheit unter der Verwendung von permanentmagneterregten Synchronmotoren zu schaffen, durch welche sowohl bei Geradeausfahrt als auch in Kurvenfahrt Vorteile erzielt werden können und der Verschleiß sowohl der Räder als auch der Schienen und die resultierende Lärmentwicklung insbesondere bei der Kurvenfahrt reduziert werden kann.

Gelöst wird die erfindungsgemäße Aufgabe in verfahrensmäßiger Hinsicht dadurch, dass die Drehzahl und Rotorwinkellage jedes Synchronmotors erfasst und daraus der Polradwinkel jedes Synchronmotors ermittelt wird, und bei Ermittlung eines undefinierten Polradwinkels die Synchronisierung der Wecheselrichter der Synchronmotoren zweier gegenüberliegender Einzelräder deaktiviert wird und die Drehzahl des Synchronmotors mit undefiniertem Polradwinkel bis zum Erreichen eines definierten Polradwinkels geändert wird. Die Einzelräder sind bei Geradeauslauf starr miteinander gekoppelt und es sind somit optimale Laufeigenschaften bei gleichzeitig geringem Verschleiß an Einzelrädern und Schienen erzielbar. Zufolge des starren Drehzahlverhaltens von Synchronmotoren wird eine Art "elektrische Welle" zwischen den gegenüberliegenden Einzelrädern bzw. eine entsprechende starre Kopplung bewirkt. Eine mechanische Welle zwischen den Antriebsmotoren der gegenüberliegenden Einzelrädern, welche bei Niederflur-Straßenbahnen hinderlich wäre, ist nicht erforderlich. Sobald detektiert wird, dass sich das Schienenfahrzeug in Kurvenlage befindet, wird die Kopplung der gegenüberliegenden Einzelräder aufgehoben, so dass auch während der Kurvenfahrt optimale Laufeigenschaften bei gleichzeitig geringem Verschleiß an Laufrädern und Schienen erzielbar sind. An sich werden also die beiden Synchronmotoren gegenüberliegender Einzelräder synchron angesteuert, während für den Kurvenlauf und allenfalls für andere spezielle Situationen auch eine unterschiedliche Ansteuerung der Motoren der gegenüberliegenden Einzelräder möglich ist. Dazu zählt beispielsweise auch der sogenannte Sinuslauf, der zur Verringerung des Verschleißes der Laufräder und Schienen bei Geradeausfahrt des Schienenfahrzeugs eingesetzt werden kann. Dadurch, dass pro Synchronmotor ein eigener Wechselrichter zur Verfügung steht, kann eine individuelle Steuerung bzw. Regelung der Synchronmotoren aller Einzelräder des Schienenfahrzeugs vorgenommen werden. Durch die erfindungsgemäßen Merkmale kann ein Synchronmotor, welcher "außer Tritt" geraten ist, was der Fall ist, wenn der Rotor nicht mehr dem Drehfeld des Stators folgt, wieder "eingefangen" werden. Dieses sogenannte "Einfangen" eines Synchronmotors kann normalerweise nur durch Stoppen des Synchronmotors bzw. Anhalten des Schienenfahrzeugs und Neuanfahren des Schienenfahrzeugs oder genaues Messen der Drehfeldfrequenz und entsprechende Ansteuerung des Motors ermöglicht werden. Dadurch, dass bei der gegenständlichen Erfindung je Synchronmotor ein eigener Wechselrichter vorgesehen ist, kann beim "Außer Tritt"-Fallen eines Synchronmotors die Synchronisierung zwischen den Synchronmotoren einander gegenüberliegender Einzelräder getrennt werden und die Synchronisierung durch entsprechende Ansteuerung eines Wechselrichters wiederhergestellt werden.

Vorteilhafterweise werden die Wechselrichter der Synchronmotoren gegenüberliegender Einzelräder bei Detektion eines Kurvenlaufs derart geregelt, dass der Synchronmotor des in der Kurve außenliegenden Einzelrades mit einer höheren Drehzahl als der Synchronmotor des in der Kurve innenliegenden Einzelrades angetrieben wird. Dadurch kann der Verschleiß der Einzelräder sowie der Schienen bei Kurvenlauf und die entsprechende Lärmentwicklung reduziert werden.

Wenn der Radius der Kurve erfasst und die Wechselrichter der Synchronmotoren gegenüberliegender Einzelräder in Abhängigkeit des Kurvenradius geregelt werden, können noch weitere Verbesserungen erzielt werden.

Gemäß einem weiteren Merkmal der Erfindung ist vorgesehen, dass Die Kurvenlage des Schienenfahrzeugs kann über die Beschleunigung des Schienenfahrzeugs in zumindest zwei Richtungen detektiert werden. Derartige Beschleunigungssensoren haben gegenüber optischen Sensoren den Vorteil, dass sie unempfindlich gegen über von Verschmutzungen sind.

Gelöst wird die erfindungsgemäße Aufgabe auch durch eine oben genannte Antriebseinheit für Schienenfahrzeuge, wobei zur Ermittlung der Polradwinkel jedes Synchronmotors Einrichtungen zur Erfassung der Drehzahl und der Rotorwinkellage jedes Synchronmotors vorgesehen sind, welche mit der Regeleinrichtung verbunden sind. Zu den dadurch erzielbaren Vorteilen wird auf die obige Beschreibung des erfindungsgemäßen Verfahrens zur Regelung der Antriebseinheit für Schienenfahrzeuge verwiesen.

Vorteilhafterweise ist die Regeleinrichtung derart ausgebildet, dass bei Detektion eines Kurvenlaufs des Schienenfahrzeugs die Synchronmotoren der in der Kurve außenliegenden Einzelräder eine höhere Drehzahl als die Synchronmotoren der in der Kurve innenliegenden Einzelräder aufweist.

Vorteilhafterweise ist die Detektionseinrichtung zur Erfassung des Radius der Kurve ausgebildet. Dadurch kann eine entsprechende Regelung der Synchronmotoren der gegenüberliegenden Einzelräder in Abhängigkeit des Radius der Kurve erfolgen.

Die Detektionseinrichtung kann durch zumindest zwei Beschleunigungssensoren zur Messung der Beschleunigung des Schienenfahrzeugs in zumindest zwei Richtungen gebildet sein.

Die Regeleinrichtung ist vorteilhafterweise durch einen Mikroprozessor gebildet.

Die vorliegende Erfindung wird anhand der beigefügten Zeichnungen näher erläutert. Darin zeigen
Fig. 1 schematisch eine Antriebseinheit mit einer starren Kopplung zweier gegenüberliegender Einzelräder;
Fig. 2 die elektrische Kopplung zweier gegenüberliegender Einzelräder gemäß der vorliegenden Erfindung;
Fig. 3 eine schematische Draufsicht auf ein Schienenfahrzeug, bei dem die Antriebseinheiten gemäß der vorliegenden Erfindung geregelt werden; und
Fig. 4 ein Zeitdiagramm zur Erläuterung der erfindungsgemäßen Regelung.

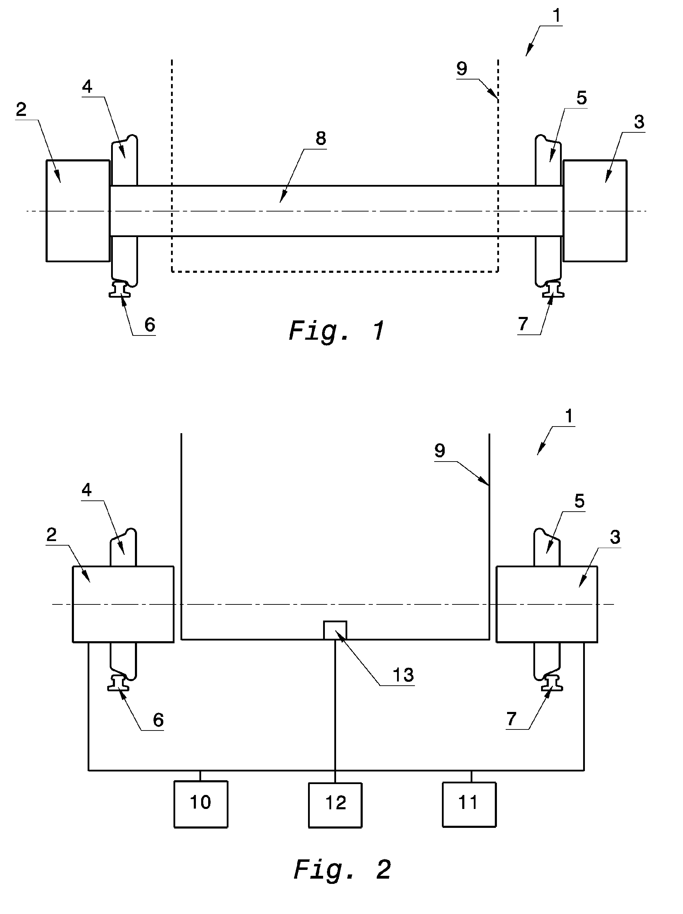

Fig. 1 zeigt eine Antriebseinheit 1 eines Schienenfahrzeugs mit einem linken Einzelrad 4 und einem rechten Einzelrad 5, welche auf entsprechenden Schienen 6, 7 angeordnet sind. Die Einzelräder 4, 5 werden durch Synchronmotoren 2, 3 angetrieben. Zur Kopplung der beiden Einzelräder 4, 5 ist eine starre Welle 8 vorgesehen, über welche die beiden Einzelräder 4, 5 starr miteinander gekoppelt sind. Durch die Kopplung werden lauftechnische Probleme und ein erhöhter Spurkranzverschleiß der Einzelräder 4, 5 und der Schienen 6, 7 vermieden. Die Welle 8 steht jedoch der Anwendung der Niederflurtechnik mit entsprechend tiefliegendem Wagenkasten 9 (strichliert eingezeichnet) entgegen.

Fig. 2 zeigt ein schematisches Blockschaltbild der erfindungsgemäßen Regelung einer Antriebseinheit 1 für Schienenfahrzeuge. Die einander gegenüberliegenden Einzelräder 4, 5 werden jeweils von einem permanentmagneterregten Synchronmotor 2, 3 angetrieben. Jeder Synchronmotor 2, 3 wird durch einen separaten Wechselrichter 10, 11 angesteuert. Die Geschwindigkeitsregelung des Schienenfahrzeugs erfolgt über die Einstellung der Frequenz der Wechselrichter 10, 11. Aufgrund des bei der Niederflurtechnik tiefliegenden Waagenkastens 9 ist eine Kopplung mit Hilfe einer starren Welle 8 (gemäß Fig. 1) nicht möglich. Daher wird die Kopplung der Synchronmotoren 2, 3 der einander gegenüberliegenden Einzelräder 4, 5 elektrisch über eine Regeleinrichtung 12 vorgenommen. Demgemäß ist die beispielsweise durch einen Mikroprozessor gebildete Regeleinrichtung 12 mit den beiden Wechselrichtern 10, 11 zur Ansteuerung der Synchronmotoren 2, 3 der Einzelräder 4, 5 verbunden. Weiters ist die Regeleinrichtung 12 mit einer Einrichtung 13 zur Detektion der Kurvenlage des Schienenfahrzeugs verbunden. Bei Detektion eines Geradeauslaufs des Schienenfahrzeugs werden die Wechselrichter 10, 11 der Synchronmotoren 2, 3 synchron betrieben. Bei Detektion eines Kurvenlaufs des Schienenfahrzeugs wird die Synchronisierung der Wechselrichter 10, 11 deaktiviert. Wichtig bei der erfindungsgemäßen Regelung der Antriebseinheit 1 ist, dass die gegenüberliegenden Einzelräder 4, 5 des Schienenfahrzeugs bei Geradeausfahrt gekoppelt werden und bei Kurvenfahrt entkoppelt werden. Dadurch könne die Laufeigenschaften sowohl bei der Geradeausfahrt als auch beim Kurvenlauf verbessert werden und der Verschleiß sowohl an Einzelrädern 4, 5 als auch an Schienen 6, 7 reduziert werden.

Zusätzlich kann die Regelung beim Kurvenlauf derart geschehen, dass der Synchronmotor 2, 3 des in der Kurve außenliegenden Einzelrades 4, 5 mit einer höheren Drehzahl n als der Synchronmotor 2, 3 des in der Kurve innenliegenden Einzelrades 4, 5 angetrieben wird. Eine weitere Verbesserung kann dadurch erzielt werden, wenn der Radius R der Kurve erfasst wird und die Wechselrichter 10, 11 der Synchronmotoren 2, 3 gegenüberliegender Einzelräder 4, 5 in Abhängigkeit des Kurvenradius R geregelt werden. Dadurch kann auch die störende Lärmentwicklung bei der Kurvenfahrt reduziert oder vermieden werden.

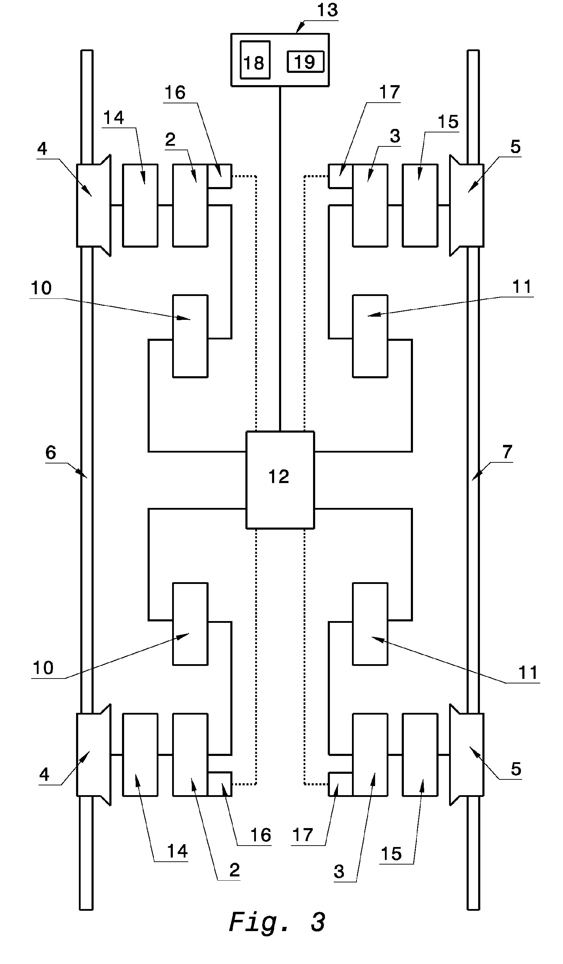

Fig. 3 zeigt eine schematische Draufsicht auf ein Schienenfahrzeug, wobei jeweils zwei einander gegenüberliegende Einzelräder 4, 5 auf den Schienen 6, 7 abrollen. Jedes Einzelrad 4, 5 ist allenfalls unter Zwischenschaltung eines Getriebes 14, 15 mit jeweils einem permanentmagneterregten Synchronmotor 2, 3 verbunden. Die Synchronmotoren 2, 3 werden über entsprechende Wechselrichter 10, 11 angesteuert. Die Wechselrichter 10, 11 sind mit einer Regeleinrichtung 12 verbunden, welche wiederum mit der Detektionseinrichtung 13 verbunden ist. Die Detektionseinrichtung 13 kann durch zumindest zwei Beschleunigungssensoren 18, 19 gebildet sein, welche die Beschleunigung des Schienenfahrzeugs in zumindest zwei Richtungen messen. Es sind Einrichtungen 16, 17 zur Erfassung der Drehzahl n und der Lage des Rotorwinkels Θ jedes Synchronmotors 2, 3 vorgesehen, welche mit der Regeleinrichtung 12 verbunden sind. Durch die Erfassung der Drehzahl n und der Lage des Rotorwinkels Θ jedes Synchronmotors 2, 3 kann der Polradwinkel δ jedes Synchronmotors 2, 3 ermittelt werden. Bei Erkennung eines undefinierten Polradwinkels δ, was dann der Fall ist, wenn der Rotor des Synchronmotors 2, 3 dem Drehfeld des Stators nicht mehr folgt, kann die Synchronisierung der Wechselrichter 10, 11 der Synchronmotoren 2, 3 der gegenüberliegenden Einzelräder 4, 5 deaktiviert werden und die Drehzahl n des Synchronmotors 2, 3 mit undefiniertem Polradwinkel δ bis zum Erreichen eines definierten Polradwinkels δ geändert werden. Auf diese Weise kann ein "außer Tritt" geratener Synchronmotor 2, 3 wieder "eingefangen" werden. Dies stellt eine Optimierung des gegenständlichen Regelungsverfahrens dar.

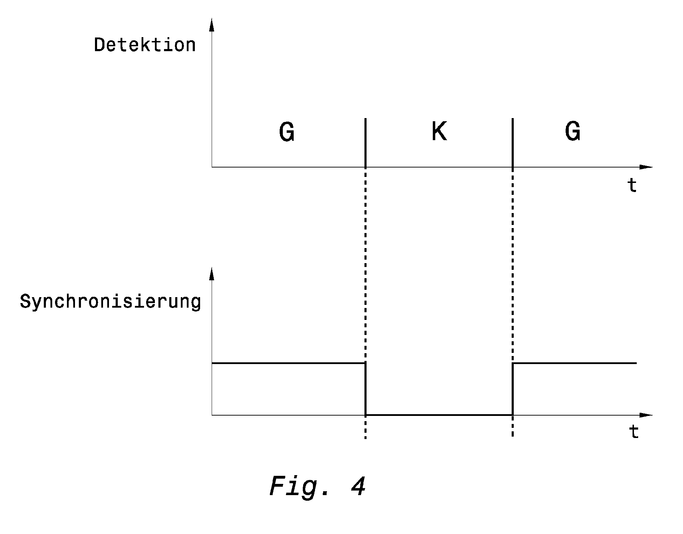

Schließlich zeigt Fig. 4 schematisch einen zeitlichen Verlauf des gegenständlichen Regelungsverfahrens einer Antriebseinheit 1 eines Schienenfahrzeugs, wobei im obersten Zeitverlauf der Verlauf der Schienen dargestellt ist. Mit G ist ein gerader Verlauf der Schienen und mit K ein Kurvenlauf der Schienen gekennzeichnet. Im unteren Zeitdiagramm wird die Synchronisierung der Wechselrichter 10, 11 der Synchronmotoren 2, 3 einander gegenüberliegender Einzelräder 4, 5 dargestellt. Demgemäß wird bei Detektion eines Geraudeauslaufs G des Schienenfahrzeugs eine Synchronisierung der Wechselrichter 10, 11 vorgenommen, wohingegen bei Detektion eines Kurvenlaufs K des Schienenfahrzeugs die Synchronisierung der Wechselrichter 10, 11 deaktiviert wird.

Das erfindungsgemäße Regelungsverfahren dient zur Verbesserung der Laufeigenschaften des Schienenfahrzeugs sowohl bei Geradeauslauf als auch im Kurvenlauf und zur Reduktion des Verschleißes der Einzelräder 4, 5 und der Schienen 6, 7 sowie der Lärmentwicklung im Kurvenlauf des Schienenfahrzeugs.

## Patentansprüche

1. Verfahren zur Regelung einer Antriebseinheit (1) für Schienenfahrzeuge, wobei Einzelräder (4, 5) jeweils von einem permanentmagneterregten Synchronmotor (2, 3) angetrieben werden und jeder Synchronmotor (2, 3) durch einen Wechselrichter (10, 11) angesteuert wird, und die Kurvenlage des Schienenfahrzeugs detektiert wird, wobei die Wechselrichter (10, 11) der Synchronmotoren (2, 3) zweier gegenüberliegender Einzelräder (4, 5) bei Detektion eines Geradeauslaufs (G) des Schienenfahrzeugs synchronisiert betrieben werden, und bei Detektion eines Kurvenlaufs (K) des Schienenfahrzeugs die Synchronisierung deaktiviert wird, **dadurch gekennzeichnet, dass** die Drehzahl (n) und die Lage des Rotorwinkels (Θ) jedes Synchronmotors (2, 3) erfasst und daraus der Polradwinkel (δ) jedes Synchronmotors (2, 3) ermittelt wird, und bei Ermittlung eines undefinierten Polradwinkels (δ) die Synchronisierung der Wechselrichter (10, 11) der Synchronmotoren (2, 3) zweier gegenüberliegender Einzelräder (4, 5) deaktiviert wird und die Drehzahl (n) des Synchronmotors (2, 3) mit undefiniertem Polradwinkel (δ) bis zum Erreichen eines definierten Polradwinkels (δ) geändert wird.

2. Verfahren nach Anspruch 1, **dadurch gekennzeichnet, dass** die Wechselrichter (10, 11) der Synchronmotoren (2, 3) gegenüberliegender Einzelräder (4, 5) bei Detektion eines Kurvenlaufs (K) derart geregelt werden, dass der Synchronmotor (2, 3) des in der Kurve außenliegenden Einzelrades (4, 5) mit einer höheren Drehzahl (n) als der Synchronmotor (3, 2) des in der Kurve innenliegenden Einzelrades (5, 4) angetrieben wird.

3. Verfahren nach Anspruch 1 oder 2, **dadurch gekennzeichnet, dass** der Radius (R) der Kurve erfasst wird und die Wechselrichter (10, 11) der Synchronmotoren (2, 3) gegenüberliegender Einzelräder (4, 5) in Abhängigkeit des Kurvenradius (R) geregelt werden.

4. Verfahren nach einem der Ansprüche 1 bis 3, **dadurch gekennzeichnet, dass** die Kurvenlage des Schienenfahrzeugs über die Beschleunigung des Schienenfahrzeugs in zumindest zwei Richtungen detektiert wird.

5. Antriebseinheit (1) für Schienenfahrzeuge, mit jeweils von einem permanentmagneterregten Synchronmotor (2, 3) angetriebenen Einzelrädern (4, 5), wobei jeder Synchronmotor (2, 3) mit einem Wechselrichter (10, 11) verbunden ist, mit einer mit den Wechselrichtern (10, 11) verbundenen Regeleinrichtung (12), und mit einer Einrichtung (13) zur Detektion der Kurvenlage des Schienenfahrzeugs, wobei die Regeleinrichtung (12) mit den Wechselrichtern (10, 11) der Synchronmotoren (2, 3) gegenüberliegender Einzelräder (4, 5) und der Detektionseinrichtung (13) verbunden und derart ausgebildet ist, dass die Wechselrichter (10, 11) zur Ansteuerung der Synchronmotoren (2, 3) der gegenüberliegenden Einzelräder (4, 5) bei Detektion eines Geradeauslaufs (G) des Schienenfahrzeugs synchronisiert sind, während bei Detektion eines Kurvenlaufs (K) des Schienenfahrzeugs die Synchronisierung der Wechselrichter (10, 11) zur Ansteuerung der Synchronmotoren (2, 3) der gegenüberliegenden Einzelräder (4, 5) deaktiviert ist, **dadurch gekennzeichnet, dass** zur Ermittlung der Polradwinkel (δ) jedes Synchronmotors (2, 3) Einrichtungen (16, 17) zur Erfassung der Drehzahl (n) und Lage des Rotorwinkels (Θ) jedes Synchronmotors (2, 3) vorgesehen sind, welche mit der Regeleinrichtung (12) verbunden sind.

6. Antriebseinheit (1) nach Anspruch 5, **dadurch gekennzeichnet, dass** die Regeleinrichtung (12) derart ausgebildet ist, dass bei Detektion eines Kurvenlaufs (K) die Synchronmotoren (2, 3) der in der Kurve außenliegenden Einzelräder (4, 5) eine höhere Drehzahl (n) als die Synchronmotoren (3, 2) der in der Kurve innenliegenden Einzelräder (5, 4) aufweist.

7. Antriebseinheit (1) nach Anspruch 5 oder 6, **dadurch gekennzeichnet, dass** die Detektionseinrichtung (13) zur Erfassung des Radius (R) der Kurve ausgebildet ist.

8. Antriebseinheit (1) nach einem der Ansprüche 5 bis 7, **dadurch gekennzeichnet, dass** die Detektionseinrichtung (13) durch zumindest zwei Beschleunigungssensoren (18, 19) zur Messung der Beschleunigung des Schienenfahrzeugs in zumindest zwei Richtungen gebildet ist.

9. Antriebseinheit (1) nach einem der Ansprüche 5 bis 8, **dadurch gekennzeichnet, dass** die Regeleinrichtung (12) durch einen Mikroprozessor gebildet ist.

## Claims

1. A method for controlling a drive unit (1) for rail vehicles, wherein individual wheels (4, 5) are each driven by a synchronous motor (2, 3) that is excited by permanent magnets and each synchronous motor (2, 3) is actuated by an inverter (10, 11), and the cornering ability of the rail vehicle is detected, wherein the inverters (10, 11) of the synchronous motors (2, 3) of two opposite individual wheels (4, 5) when detecting a directional stability (G) of the rail vehicle are operated synchronously, and when detecting cornering (K) of the rail vehicle the synchronization is deactivated, **characterized in that** a number of revolutions (n) and the position of the rotor angle (Θ) of each synchronous motor (2, 3) are detected and from this the polar wheel angle (δ) of each synchronous motor (2, 3) is determined, and when determining an undefined polar wheel angle (δ) the synchronization of the inverters (10, 11) of the synchronous motors (2, 3) of two opposite individual wheels (4, 5) is deactivated and the number of revolutions (n) of the synchronous motor (2, 3) with undefined polar wheel angle (δ) is changed until a defined polar wheel angle (δ) is reached.

2. The method according to claim 1, **characterized in that** when detecting a cornering (K) the inverters (10, 11) of the synchronous motors (2, 3) of opposite individual wheels (4, 5) are controlled in such a manner that the synchronous motor (2, 3) of the individual wheel (4, 5) that is exterior in the curve is actuated with a higher number of revolutions (n) than the synchronous motor (3, 2) of the individual wheel (5, 4) that is interior in the curve.

3. The method according to claim 1 or 2, **characterized in that** the radius (R) of the curve is detected and the inverters (10, 11) of the synchronous motors (2, 3) of opposite individual wheels (4, 5) are controlled depending on the curve radius (R).

4. The method according to one of claims 1 to 3, **characterized in that** the cornering ability of the rail vehicle is detected via the acceleration of the rail vehicle in at least two directions.

5. A drive unit (1) for rail vehicles comprising individual wheels (4, 5) each driven by a synchronous motor (2, 3) that is excited by permanent magnets, wherein each synchronous motor (2, 3) is connected with an inverter (10, 11), a control device (12) connected with the inverters (10, 11) and with a device (13) for detecting the cornering ability of the rail vehicle, wherein the control device (12) is connected with the inverters (10, 11) of the synchronous motors (2, 3) of opposite individual wheels (4, 5) and the detection device (13) and is designed in such a manner that the inverters (10, 11) for actuation of the synchronous motors (2, 3) of the opposite individual wheels (4, 5) are synchronized when detecting a directional stability (G) of the rail vehicle, while when detecting a cornering (K) of the rail vehicle the synchronization of inverters (10, 11) for actuation of the synchronous motors (2, 3) of opposite individual wheels (4, 5) is deactivated, **characterized in that** in order to determine the polar wheel angle (δ) of each synchronous motor (2, 3) units (16, 17) for detecting the number of revolutions (n) and the position of the rotor angle (Θ) of each synchronous motor (2, 3) are provided, which are connected with the control device (12).

6. The drive unit (1) according to claim 5, **characterized in that** the control device (12) is designed in such a manner that when detecting a cornering (K) the synchronous motors (2, 3) of the individual wheels (4, 5) that are exterior in the curve have a higher number of revolutions (n) than the synchronous motors (3, 2) of the individual wheels (5, 4) that are interior in the curve.

7. The drive unit (1) according to claim 5 or 6, **characterized in that** the detection device (13) is designed for detection of the radius (R) of the curve.

8. The drive unit (1) according to one of claims 5 to 7, **characterized in that** the detection device (13) is formed by at least two acceleration sensors (18, 19) for measuring the acceleration of the rail vehicle in at least two directions.

9. The drive unit (1) according to one of claims 5 to 8, **characterized in that** the control device (12) is formed by a microprocessor.

## Revendications

1. Procédé de régulation d'une unité d'entraînement (1) pour des véhicules ferroviaires, sachant que des roues individuelles (4, 5) sont entraînées respectivement par un moteur synchrone (2, 3) excité par un aimant permanent et que chaque moteur synchrone (2, 3) est commandé par un onduleur (10, 11), et sachant que la tenue de route dans les virages du véhicule ferroviaire est détectée, sachant que les onduleurs (10, 11) des moteurs synchrones (2, 3) de deux roues individuelles (4, 5) se faisant face fonctionnent de manière synchronisée lors de la détection d'un déplacement en ligne droite (G) du véhicule ferroviaire et que la synchronisation est désactivée lors de la détection d'un déplacement dans un virage (K) du véhicule ferroviaire, **caractérisé en ce que** la vitesse de rotation (n) et la position de l'angle de rotor (Θ) de chaque moteur synchrone (2, 3) sont saisies, **en ce qu'**on détermine à partir de ces dernières l'angle de rotor magnétique (δ) de chaque moteur synchrone (2, 3), et **en ce que**, lors de la détermination d'un angle de rotor magnétique (δ) non défini, la synchronisation des onduleurs (10, 11) des moteurs synchrones (2, 3) de deux roues individuelles (4, 5) se faisant face est désactivée, et **en ce que** la vitesse de rotation (n) du moteur synchrone (2, 3) est modifiée avec l'angle de rotor magnétique (δ) non défini jusqu'à l'obtention d'un angle de rotor magnétique (δ) défini.

2. Procédé selon la revendication 1, **caractérisé en ce que** les onduleurs (10, 11) des moteurs synchrones (2, 3) de roues individuelles (4, 5) se faisant face sont réglés lors de la détection d'un déplacement dans un virage (K) de telle manière que le moteur synchrone (2, 3) de la roue individuelle (4, 5) se trouvant à l'extérieur du virage est entraîné à une vitesse de rotation (n) supérieure à celle du moteur synchrone (3, 2) de la roue individuelle (5, 4) se trouvant à l'intérieur du virage.

3. Procédé selon la revendication 1 ou 2, **caractérisé en ce que** le rayon (R) du virage est saisi, et **en ce que** les onduleurs (10, 11) de moteurs synchrones (2, 3) de roues individuelles (4, 5) se faisant face sont réglés en fonction du rayon du virage (R).

4. Procédé selon l'une quelconque des revendications 1 à 3, **caractérisé en ce que** la tenue de route dans les virages du véhicule ferroviaire est détectée par l'intermédiaire de l'accélération du véhicule ferroviaire dans au moins deux directions.

5. Unité d'entraînement (1) pour des véhicules ferroviaires, comprenant respectivement des roues individuelles (4, 5) entraînées respectivement par un moteur synchrone (2, 3) excité par un aimant permanent, sachant que chaque moteur synchrone (2, 3) est relié à un onduleur (10, 11), comprenant un système de réglage (12) relié aux onduleurs (10, 11), et comprenant un système (13) de détection de la tenue de route dans les virages du véhicule ferroviaire, sachant que le système de réglage (12) est relié aux onduleurs (10, 11) des moteurs synchrones (2, 3) de roues individuelles (4, 5) se faisant face et au système de détection (13) et est réalisé de telle manière que les onduleurs (10, 11) sont synchronisés pour commander les moteurs synchrones (2, 3) des roues individuelles (4, 5) se faisant face lors de la détection d'un déplacement en ligne droite (G) du véhicule ferroviaire, tandis que, lors de la détection d'un déplacement dans un virage (K) du véhicule ferroviaire, la synchronisation des onduleurs (10, 11) servant à commander les moteurs synchrones (2, 3) des roues individuelles (4, 5) se faisant face est désactivée, **caractérisée en ce que** sont prévus, aux fins de la détermination des angles de rotor magnétique (δ) de chaque moteur synchrone (2, 3), des systèmes (16, 17) servant à saisir la vitesse de rotation (n) et la position de l'angle de rotor (Θ) de chaque moteur synchrone (2, 3), lesquels systèmes sont reliés au système de réglage (12).

6. Unité d'entraînement (1) selon la revendication 5, **caractérisée en ce que** le système de réglage (12) est réalisé de telle manière que, lors de la détection d'un déplacement dans un virage (K), les moteurs synchrones (2, 3) des roues individuelles (4, 5) se trouvant à l'extérieur du virage présentent une vitesse de rotation (n) supérieure à celle des moteurs synchrones (3, 2) des roues individuelles (5, 4) se trouvant à l'intérieur du virage.

7. Unité d'entraînement (1) selon la revendication 5 ou 6, **caractérisée en ce que** le système de détection (13) est réalisé pour saisir le rayon (R) du virage.

8. Unité d'entraînement (1) selon l'une quelconque des revendications 5 à 7, **caractérisée en ce que** le système de détection (13) est formé par au moins deux capteurs d'accélération (18, 19) servant à mesurer l'accélération du véhicule ferroviaire dans au moins deux directions.

9. Unité d'entraînement (1) selon l'une quelconque des revendications 5 à 8, **caractérisée en ce que** le système de réglage (12) est formé par un microprocesseur.
